(19)

**Europäisches Patentamt**
**European Patent Office**
**Office européen des brevets**

(11) **EP 4 568 134 A1**

(12) **EUROPEAN PATENT APPLICATION**

(43) Date of publication:
**11.06.2025 Bulletin 2025/24**

(21) Application number: **24215070.4**

(22) Date of filing: **25.11.2024**

(51) International Patent Classification (IPC):
*H04B 7/06* (2006.01)     *H04B 7/08* (2006.01)

(52) Cooperative Patent Classification (CPC):
**H04B 7/06952; H04B 7/088**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.12.2023 GB 202318475**

(71) Applicant: **Nokia Technologies Oy**
**02610 Espoo (FI)**

(72) Inventors:
• **REZAIE, Sajad**
**Aalborg (DK)**
• **BARBU, Oana-Elena**
**Aalborg (DK)**
• **NAVARRO, Carles**
**Aalborg (DK)**
• **FERNANDES, Filipa**
**Aalborg (DK)**

(74) Representative: **Nokia EPO representatives**
**Nokia Technologies Oy**
**Karakaari 7**
**02610 Espoo (FI)**

(54) **BEAM SWEEPING FOR ROTATING DEVICES**

(57)     Various example embodiments relate to devices, methods, apparatuses and computer readable mediums supporting adaptive beam sweeping for rotating devices. A terminal device may be configured to measure transmitting beams using a first receiving beam in a beam sweeping sequence comprising a first set of receiving beams, and measure first orientation of the terminal device corresponding to the beam measurement performed using the first receiving beam. For a subsequent receiving beam in the beam sweeping sequence, the terminal device may measure its second orientation, select a receiving beam from a second set of receiving beams, and measure the transmitting beams using the selected receiving beam. When the terminal device is in the second orientation, the receiving beam selected from the second set of receiving beams is oriented to correspond to directions covered by the subsequent receiving beam in the beam sweeping sequence when the terminal device is in the first orientation.

FIG. 6

## Description

TECHNICAL FIELD

Various example embodiments described herein generally relate to communication technologies, and more particularly, to devices, methods, apparatuses and computer readable mediums supporting adaptive beam sweeping for rotating devices.

BACKGROUND

Certain abbreviations that may be found in the description and/or in the figures are herewith defined as follows:

| | |
|---|---|
| BS | Base Station |
| MIMO | Multiple-Input Multiple-Output |
| PBCH | Physical Broadcast Channel |
| PSS | Primary Synchronization Signal |
| RAN | Radio Access Network |
| RS | Reference Signal |
| RSRP | Reference Signal Received Power |
| RSRQ | Reference Signal Received Quality |
| SINR | Signal to Interference plus Noise Ratio |
| SS | Synchronization Signal |
| SSB | Synchronization Signal Block |
| SSS | Secondary Synchronization Signal |
| TRP | Transmission Reception Point |
| UE | User Equipment |

Communications at high frequencies e.g. millimeter wave (mmWave) utilize beamforming to compensate for severe propagation loss. The network and user equipment (UE) align their beams through a set of operations known as beam management, including for example beam sweeping, beam measurement and reporting, beam maintenance and recovery.

SUMMARY

A brief summary of exemplary embodiments is provided below to provide basic understanding of some aspects of various embodiments. It should be noted that this summary is not intended to identify key features of essential elements or define scopes of the embodiments, and its sole purpose is to introduce some concepts in a simplified form as a preamble for a more detailed description provided below.

In a first aspect, an example embodiment of a terminal device is provided. The terminal device may comprise at least one processor and at least one memory. The at least one memory stores instructions that, when executed by the at least one processor, cause the terminal device at least to measure a plurality of transmitting beams using a first receiving beam in a beam sweeping sequence, and measure a first orientation of the terminal device corresponding to the beam measurement performed using the first receiving beam. The beam sweeping sequence may comprise a first set of receiving beams. For a subsequent receiving beam in the beam sweeping sequence, the terminal device may measure a second orientation of the terminal device, select a receiving beam from a second set of receiving beams for a second beam measurement corresponding to the second orientation, and measure the plurality of transmitting beams using the selected receiving beam. When the terminal device is in the second orientation, the receiving beam selected from the second set of receiving beams is oriented to correspond to directions covered by the subsequent receiving beam in the beam sweeping sequence when the terminal device is in the first orientation.

In a second aspect, an example embodiment of a method is provided. The method may comprise measuring a plurality of transmitting beams using a first receiving beam in a beam sweeping sequence, and measuring a first orientation of a terminal device corresponding to the beam measurement performed using the first receiving beam. The beam sweeping sequence may comprise a first set of receiving beams. The method may further comprise, for a subsequent receiving beam in the beam sweeping sequence, measuring a second orientation of the terminal device, selecting a receiving beam from a second set of receiving beams for a second beam measurement corresponding to the second orientation, and measuring the plurality of transmitting beams using the selected receiving beam. When the terminal device is in the second orientation, the receiving beam selected from the second set of receiving beams is oriented to correspond to directions covered by the subsequent receiving beam in the beam sweeping sequence when the terminal device is in the first orientation.

Example embodiments of apparatus and computer readable medium for beam sweeping at a rotating device are also provided. The example embodiments of the apparatus and computer readable medium generally correspond to the above example embodiments of the terminal device and method, and a repetitive description thereof is omitted here for convenience.

Other features and advantages of the example embodiments of the present disclosure will also be apparent from the following description of specific embodiments when read in conjunction with the accompanying drawings, which illustrate, by way of example, the principles of example embodiments of the present disclosure.

BRIEF DESCRIPTION OF THE DRAWINGS

Some example embodiments will now be described, by way of non-limiting examples, with reference to the accompanying drawings.

Fig. 1 is a schematic diagram illustrating a wireless communication network in which example embodiments of the present disclosure may be practiced.

Fig. 2 is a schematic diagram illustrating a beam sweeping procedure without considering device orientation.

Fig. 3 is a schematic diagram illustrating an example of two sets of beams used in a beam sweeping procedure according to an example embodiment of the present disclosure.

Fig. 4 is a schematic diagram illustrating beams in a default codebook mapping to discretized directions according to an example embodiment of the present disclosure.

Fig. 5 is a schematic diagram illustrating beams in an oversampled codebook mapping to discretized directions according to an example embodiment of the present disclosure.

Fig. 6 is a schematic diagram illustrating a beam sweeping procedure considering device orientation according to an example embodiment of the present disclosure.

Fig. 7 is a schematic diagram illustrating beam measurements aggregation in a beam sweeping procedure according to an example embodiment of the present disclosure.

Fig. 8 is a schematic flow chart illustrating a method for beam sweeping according to an example embodiment of the present disclosure.

Fig. 9 is a block diagram illustrating an apparatus according to an example embodiment of the present disclosure.

Fig. 10 is a schematic block diagram illustrating devices in a communication system according to an example embodiment of the present disclosure.

Throughout the drawings, same or similar reference numbers indicate same or similar elements. A repetitive description on the same elements would be omitted.

DETAILED DESCRIPTION

Herein below, some example embodiments are described in detail with reference to the accompanying drawings. The following description includes specific details for the purpose of providing a thorough understanding of various concepts. However, it will be apparent to those skilled in the art that these concepts may be practiced without these specific details. In some instances, well known circuits, techniques and components are shown in block diagram form to avoid obscuring the described concepts and features.

As used herein, the term "network device" refers to any suitable entities or devices that can provide cells or coverage, through which terminal devices can access the network or receive services. The network device may be commonly referred to as a base station. The term "base station" used herein can represent a node B (NodeB or NB), an evolved node B (eNodeB or eNB), or a gNB or an ng-eNB. The base station may be embodied as a macro base station, a transmission reception point (TRP), a relay node, or a low power node such as a pico base station or a femto base station. The base station may consist of several distributed network units, such as a central unit (CU), one or more distributed units (DUs), one or more remote radio heads (RRHs) or remote radio units (RRUs). The number and functions of these distributed units depend on the selected split RAN architecture.

As used herein, the term "terminal device" or "user equipment" (UE) refers to any entities or devices that can wirelessly communicate with the network device or with each other. Examples of the terminal device can include a mobile phone, a mobile terminal, a mobile station, a subscriber station, a portable subscriber station, an access terminal, a computer, a wearable device, an on-vehicle communication device, a machine type communication (MTC) device, an internet of things (IoT) device, an internet of everything (IoE) device, a device-to-device (D2D) communication device, a vehicle to everything (V2X) communication device, a sensor and the like. The term "terminal device" can be used interchangeably with UE, a user terminal, a mobile terminal, a mobile station, or a wireless device.

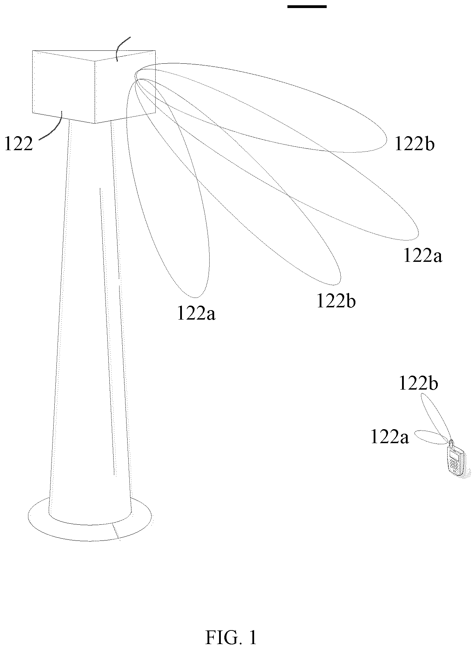

Fig. 1 illustrates, by way of example, a schematic diagram of a wireless communication network 100 in which example embodiments of the present disclosure may be practiced. The wireless communication network 100 may be for example a cellular communication network, which includes one or more base stations 120 that form a so-called radio access network (RAN) to provide access to the network for a plurality of user equipments (UEs) 110. One base station 120 and one UE 110 in communication with the base station 120 are shown as an example in Fig. 1. The base station 120 may connect to a core network (CN) (not shown). The core network may include numerous network functions (NFs) to support functionalities such as subscriber data management, authorization, authentication policy management, session management, mobility management, etc.

As shown in Fig. 1, the base station 120 may include one or more antenna panels 121, which each may include a number of dual-polarized antenna elements 122 arrayed in columns and rows. The base station 120 can control amplitudes and phase shifts of transmit signals provided to the antenna elements 122 such that the signals radiated from the antenna elements 122 coherently combine together for a particular transmit direction and destructively cancel each other out for other directions, forming an aggregated signal beam 123 with more power propagating in the particular direction. The base station 120 may transmit the beam 123 to a specific direction at a specific time and then change the direction a little bit in a next time frame and so on until it can scan all the area it should cover. Fig. 1 shows four transmit (Tx) beams 123a, 123b, 123c, 123d as an example, but the base station 120 may support more Tx beams. Similarly, the UE 110 may include a plurality of antenna elements (not shown) to form a receive signal beam 113. The UE 110 may steer the receive (Rx) beam 113 to receive signals from a specific direction. Fig. 1 shows two Rx beams 113a, 113b as an example, but the UE 110 may support more Rx beams.

The base station 120 and the UE 110 may need to align their beams during both initial access and data transmissions to ensure an acceptable communication quality. Toward this goal, 3GPP has standardized a set of operations under a broad topic of beam management, including for example beam sweeping, beam measurement and reporting, beam maintenance and recovery, to achieve precise alignment of network and UE beams. The beam management is also defined as three procedures in 3GPP TR 38.802 Section 6.1.6.1, which are summarized below:

- Procedure 1 (P-1): is used to enable UE measurement on different TRP Tx beams to support selection of TRP Tx beams/UE Rx beam(s). For beamforming at TRP, it typically includes an intra/inter-TRP Tx beam sweep from a set of different beams. For beamforming at UE, it typically includes a UE Rx beam sweep from a set of different beams.
- Procedure 2 (P-2): is used to enable UE measurement on different TRP Tx beams to possibly change inter/intra-TRP Tx beam(s). It usually uses a smaller set of finer Tx beams than in P-1 for the purpose of beam refinement. P-2 may be considered as a special case of P-1.
- Procedure 3 (P-3): is used to enable UE measurement on the same TRP Tx beam to change UE Rx beam in the case UE uses beamforming.

The procedures P-1, P-2 and P-3 may be executed sequentially to establish data transmission between the base station 120 and the UE 110 and, in case of beam failure and recovery, they may be fully repeated. In addition, the procedures P-2, P-3 may be also periodically repeated for beam maintenance. At least network triggered aperiodic beam reporting is supported under P-1, P-2, and P-3 related operations.

During beam sweeping, the base station 120 may broadcast reference signals (RSs) in all beams/directions in a burst at regular defined intervals. The broadcasting allows the UE 110 to be synchronized with the base station 120 and read the synchronization signal block (SSB) carried on the Tx beams. The SSB may include a primary synchronization signal (PSS), a secondary synchronization signal (SSS), and a physical broadcast channel (PBCH). The received PSS is one of three possible/pre-configured sequences, and it provides a timing estimate. The received SSS is one of 336 possible/pre-configured sequences, and it together with the PSS provides a physical cell ID (PCI) (one of 3*336=1008). The PBCH carries a master information block (MIB). In case of 15 kHz subcarrier spacing (SCS), the SSB may occupy 4 OFDM symbols in the time domain and 240 subcarriers in the frequency domain (20 resource blocks). An SS-burst can include up to 8 and 64 consecutive SSBs in Frequency Range 1 (FR1) and Frequency Range 2 (FR2) (also known as mmWave), respectively.

The UE 110 may measure a strength of the respective Tx beams using respective Rx beams. The beam strength may be represented by reference signal received power (RSRP), reference signal received quality (RSRQ), signal to interference plus noise ratio (SINR) or other metrics. For convenience of description, the RSRP will be described below as an example of the beam strength. In an idle mode, the UE 110 may measure the RSRP of the Tx beams based on the synchronization signals, and in a connected mode, the UE 110 may measure the RSRP of the Tx beams based on a channel state information reference signal (CSI-RS). The UE 110 may identify the beam pair(s) that has the highest RSRP and report the best Tx beam(s) to the base station 120. In the idle mode, the UE 110 may report the best beam to the base station 120 through a random access channel (RACH), and in the connected mode, the UE 110 may report the best beam to the base station 120 in a measurement report.

In the beam sweeping procedure, an SS-burst is needed for every UE Rx beam to measure the BS Tx beams. The SS-burst may have a periodicity of 5, 10, 20, 40, 80, 160 ms. Although 3GPP standard mentions that a UE can assume an SSB would be broadcasted every 20 ms, larger SS-burst periodicities (40, 80, 160 ms) can be considered for other purposes such as secondary carrier component. Furthermore, to improve energy efficiency and power saving aspect of cells in beyond 5G systems, larger SS-burst periodicity may be considered even for primary carrier component. As a result, the duration of the beam sweeping procedure increases with both SS-burst periodicity and the number of UE beams considered. A problem is that, with a larger number of beams supported by high-dimensional MIMO antenna arrays, the time required for the base station 120 and the UE 110 to complete the beam sweeping and establish the best beam pair radically increases, thus limiting the support of low latency communication. In addition, the beam measurement and feedback overhead increases accordingly.

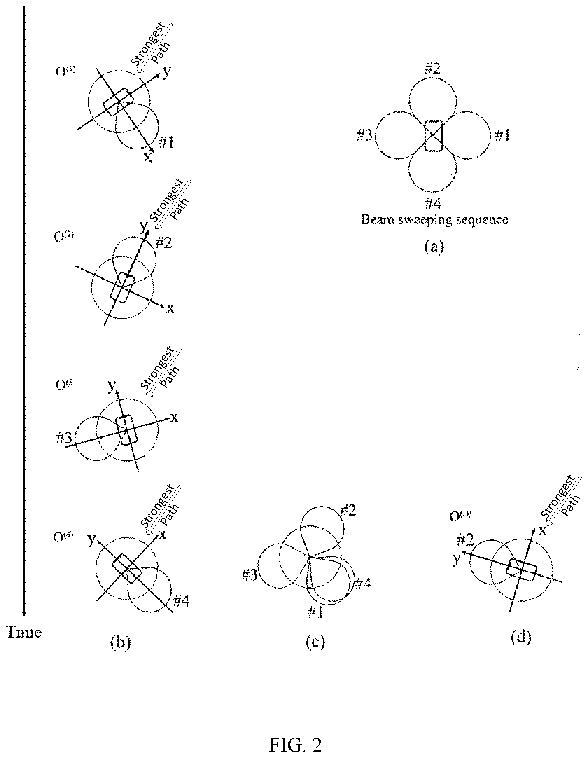

The problem can be aggravated if the UE 110 rotates but the UE rotation is not considered during the beam sweeping procedure. An example is shown in Fig. 2. Fig. 2(a) shows an example beam sweeping sequence including beams #1, #2, #3, #4 supported at the UE 110, which cover RIGHT, UP, LEFT, DOWN directions of the UE 110, respectively. The four beams #1-4 together can cover generally all directions around the UE 110. Fig. 2(b) shows the beam sweeping when the UE 110 rotates continuously. At the first time instance, the UE 110 is in a first orientation $O^{(1)}$, and it measures approximately a direction DOWN-RIGHT using the beam #1. At the second time instance, the UE 110 rotates to a second orientation $O^{(2)}$, and it measures approximately a direction UP-RIGHT using the beam #2. At the third time instance, the UE 110 rotates to a third orientation $0(3)$, and it measures approximately a direction DOWN-LEFT using the beam #3. Finally at the fourth time instance, the UE 110 rotates to a fourth orientation $0(4)$, and it measures approximately the direction DOWN-RIGHT again using the beam #4.

Then the beam measurements obtained using the beams #1-4 are aggregated. As shown in Fig. 2(c), due to the UE rotation, a significant portion of the UE surrounding is not sensed during the beam sweeping phase (e.g., the direction UP-LEFT), while some parts are sensed multiple times (e.g. the direction DOWN-RIGHT). In the example shown, the beam #2 is selected as the best UE beam because it is orientated approximately in the direction of arrival of a strongest path from the base station 120 at the time when it is used for beam sweeping. But when the UE 110 makes the decision, it may have rotated to a new orientation $O^{(D)}$ where the selected best UE beam #2 is not aligned with the direction of arrival of the strongest path, as shown in Fig. 2(d). In this case, the UE rotation causes the beam measurements obtained during the beam sweeping become outdated, which would lead to improper beam selection if the beam measurements are directly used for the beam selection at the decisioning time.

Example embodiments of the present disclosure provide a beam sweeping mechanism using at least two set of UE Rx beams to handle the UE rotation during the beam sweeping procedure. In an example embodiment, the UE may consider a first set of beams and a second set of beams. The first set of beams may include beams that the UE would use for the beam sweeping procedure if the UE does not rotate. To reduce latency of the beam sweeping procedure, the first set of beams may have coarse or low spatial resolution and low or without spatial overlap in the coverage area. The second set of beams may be used to compensate for the UE rotation, and it may have fine or high spatial resolution and high spatial overlap in the coverage area. In an example, the second set of beams may include more beams than the first set of beams, which may have high spatial overlap with each other but the beam width may not be smaller than the first set of beams.

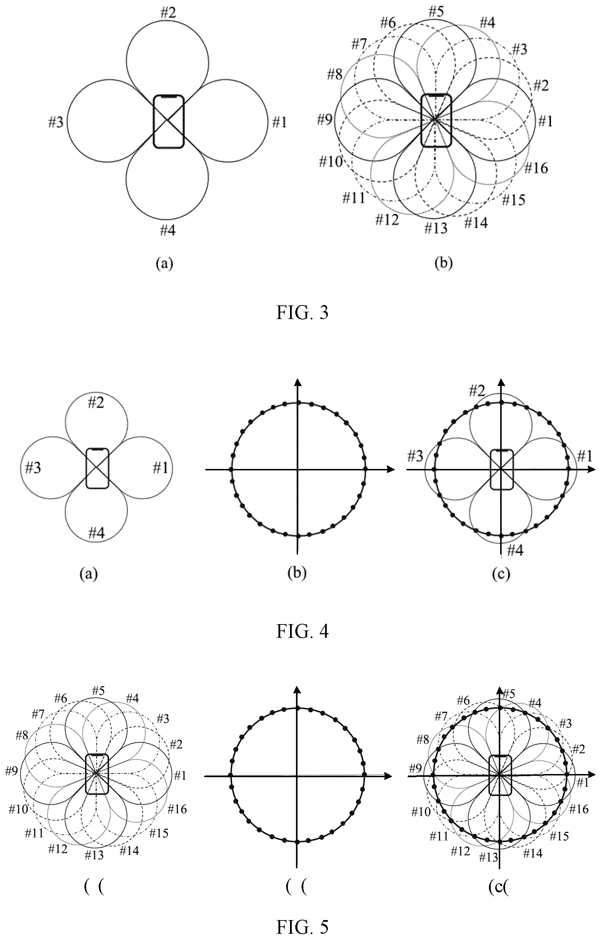

Fig. 3 shows an example of the first set of beams including 4 beams (see Fig. 3(a)) and an example of the second set of beams including 16 beams (see Fig. 3(b)). For simplicity of representation, the beams are depicted in the 2D pattern, but it would be appreciated that the beams actually have a 3D pattern. In the example shown in Fig. 3, the first set of beams #1-4 may be a subset of the second set of beams #1-16. For instance, the second set of beams #1-16 may be constructed by union over the first set of beams #1-4 and multiple shifted/rotated versions of the first set of beams #1-4. In another example embodiment, however, the first set of beams may be at least partially different from the second set of beams. For instance, at least one of the first set of beams may not be included in the second set of beams.

It would be appreciated that the first set of beams #1-4 and the second set of beams #1-16 shown in Fig. 3 are described here as an example, and the UE may determine/configure the first and second set of beams with different beams supported at the UE. In an example embodiment, the UE may consider hardware imperfections/limitations in the design of the first and second set of beams. For instance, the UE may consider position of antenna panels, antenna patterns, the number of RF chains, beamforming implementations (e.g., analog beamforming, digital beamforming, or hybrid beamforming implemented at the UE) to determine beams that can be supported at the UE. However, the hardware imperfections/limitations are not limited to these instances. Then the UE may design the number, pattern and distribution of the first and second set of beams based on the beams supported at the UE and other factors like latency requirements.

The first set of beams and the second set of beams may be represented by beam codebooks written as:

$$\mathrm{CB}^C = \{B_1^{\mathrm{CB}^C}, B_2^{\mathrm{CB}^C}, ..., B_{N^C}^{\mathrm{CB}^C}\}$$

$$\mathrm{CB}^F = \{B_1^{\mathrm{CB}^F}, B_2^{\mathrm{CB}^F}, ..., B_{N^F}^{\mathrm{CB}^F}\} \qquad \text{(Equation 1)}$$

where $N^C$ is the number of beams included in the first set, and $N^F$ is the number of beams included in the second set, where $N^C \leq N^F$. For convenience of description, the first codebook $CB^C$ may be referred to as a default codebook, and the second codebook $CB^F$ may be referred to as an oversampled codebook. As discussed above, the default codebook $CB^C$ is used when the UE is in the stationary condition, the default codebook $CB^C$ and the oversampled codebook $CB^F$ both are used when the UE is rotating during the beam sweeping procedure.

As the default and oversampled codebooks are made up of directional beams as shown in Fig. 3, a beam-direction mapping may be created for the beams in each codebook. Fig. 4 illustrates an example beam-direction mapping for the default codebook, and Fig. 5 illustrates an example beam-direction mapping for the oversampled codebook. Referring to Fig. 4 first, Fig. 4(a) shows the beams #1-4 of the default codebook, and Fig. 4(b) shows a grid of discretized angles/directions represented by points on a circle. Although the discretized angles/directions are depicted here as points on a 2D circle, it would be appreciated that the discretized angles/directions may be distributed on a 3D sphere. A local coordinate system (LCS) at the UE can define a direction grid set G with K elements, i.e.,

$$G = \{\zeta_1, \zeta_2, \ldots, \zeta_K\} \qquad \text{(Equation 2)}$$

where $\zeta_k$ may represent e.g. Cartesian coordinates of the corresponding point on the unit sphere. For example, uniform sampling in azimuth and elevation angular space is a choice for definition of the grid of directions. Alternatively, a Fibonacci grid can be considered to guarantee uniform sampling in 3D sphere surrounding of the UE.

There may be several approaches for mapping between the discretized directions and the beams in the default codebook and the oversampled codebook. In an example embodiment, if a beam #n of the default/oversampled codebook provides the highest gain among all beams in the codebook in a considered direction, the direction may be connected/mapped to the beam #n. In another example embodiment, if a beam's gain in a direction is larger than a given threshold, the direction may be connected/mapped to the beam. In an example embodiment, the mapping between a beam in the default codebook $CB^C$ and a direction can be represented with a binary value, i.e., $I_{k,n}^{G, CB^C} = 1$ when the beam #n of the default codebook $CB^C$ is mapped to a direction #k of the grid G, otherwise $I_{k,n}^{G, CB^C} = 0$. A direction set $S_n^{G, CB^C}$ of the beam #n in the default codebook $CB^C$ may be defined as:

$$I_{k,n}^{G, CB^C} = 1 \quad \leftrightarrow \quad \zeta_k \in S_n^{G, CB^C} \qquad \text{(Equation 3)}$$

Fig. 4(c) shows the mapping between the beams #1-4 in the default codebook $CB^C$ and the discretized directions in the direction grid set G.

In a similar approach, the beams #1-16 in the oversampled codebook $CB^F$ may be mapped to the discretized directions in the same direction grid set G. Fig. 5(a) shows the example beams #1-16 in the oversampled codebook $CB^F$, and Fig. 5(b) shows the grid of discretized directions represented by points on a unit circle. The mapping between a beam in the oversampled codebook $CB^F$ and a direction can be represented with a binary value, i.e., $I_{k,n}^{G, CB^F} = 1$ when the beam #n of the oversampled codebook $CB^F$ is mapped to a direction #k of the grid G, otherwise $I_{k,n}^{G, CB^F} = 0$. A direction set $S_n^{G, CB^F}$ of the beam #n in the oversampled codebook $CB^F$ may be defined as:

$$I_{k,n}^{G, CB^F} = 1 \quad \leftrightarrow \quad \zeta_k \in S_n^{G, CB^F} \qquad \text{(Equation 4)}$$

Fig. 5(c) shows the mapping between the beams #1-16 in the oversampled codebook $CB^F$ and the discretized directions in the direction grid set G. Since the beams of the oversampled codebook $CB^F$ have high overlap, each direction is mapped to several beams.

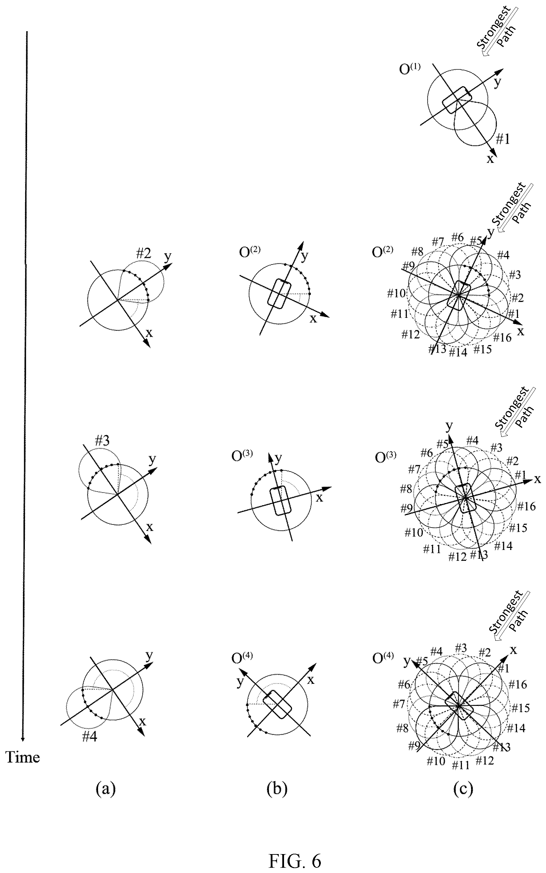

Fig. 6 illustrates a beam sweeping procedure using the default codebook $CB^C$ and the oversampled codebook $CB^F$ according to an example embodiment of the present disclosure. The procedure may be performed at the UE 110. As discussed above, the oversampled codebook $CB^F$ is used to compensate for rotation of the UE 110 during the beam sweeping procedure.

Before or at the beginning of the beam sweeping procedure, the UE 110 may determine an order of the beams in the default codebook $CB^C$ to be used for the beam sweeping, generating a beam sweeping sequence written as $\mathbf{s} = [s_1, s_2, ... , s_{N^C}]^T$, where $s_j$ can take an integer between 1 and $N^C$. The UE 110 would select the beam $s_1$ for sensing first, then the beam $s_2$, and so on. For convenience of description, it is assumed in the example shown in Fig. 6 that the beam sweeping sequence indicates the beams #1-4 of the default codebook $CB^C$ in this order. Before the UE 110 senses the network Tx beams based on the beam sweeping sequence, the UE 110 acquires synchronization with the network and determines the cell ID using the PSS and SSS carried in the SSB. As discussed above, the base station 120 broadcasts SSBs over different Tx beams. Here it is assumed that an SS-burst includes M SSBs on M Tx beams, respectively.

Referring to Fig. 6, when the UE 110 is in an orientation $O^{(1)}$, it uses the beam $B_{s_1}^{CB^C}$ (beam #1 in the example shown) in the default codebook $CB^C$ to measure RSRPs of SSBs transmitted from the base station 120 in an SS-burst. The RSRP associated with the $n$-th UE beam and the $m$-th NW beam may be denoted by $R_{n,m}$, and the UE 110 can measure $R_{s1,m}$ ($m$ = 1, 2, ... , M) using the beam $B_{s_1}^{CB^C}$, which can be stored in a matrix $\mathbf{R} \in \mathbb{R}^{N^C \times M}$. Also, the UE 110 acquires and stores the UE orientation $O^{(1)}$ corresponding to the measurement.

The initial UE orientation $O^{(1)}$ may be chosen as a reference orientation for the beam sweeping procedure, and the UE 110 may determine a global coordinate system (GCS) aligned with the local coordinate system (LCS) at the UE orientation $O^{(1)}$. For instance, the UE 110 may determine a second set of directions $\mathcal{D} = \{\psi_1, \psi_2, ... , \psi_Q\}$ in the GCS with Q directions ($|\mathcal{D}|$=Q). Each beam in the default beam codebook $CB^C$ can be mapped to a subset of the points in the direction grid $\mathcal{D}$ in the GCS, i.e., $I_{q,n}^{\mathcal{D},\mathrm{CB}^C} = 1$ when direction #q of the grid $\mathcal{D}$ ($\psi_q$) is connected to the beam #n of the default codebook $CB^C$, otherwise $I_{q,n}^{\mathcal{D},\mathrm{CB}^C} = 0$. A direction set $S_n^{\mathrm{D}}$ of the beam #n in the default codebook $CB^C$ may be defined as:

$$I_{q,n}^{\mathcal{D},\mathrm{CB}^C} = 1 \quad \leftrightarrow \quad \psi_q \in S_n^{\mathcal{D}} \qquad \text{(Equation 5)}$$

Fig. 6(a) shows directions in the GCS covered by subsequent beams (i.e., beams #2-4) in the default codebook $CB^C$ when the UE 110 is in the UE orientation $O^{(1)}$. In the example shown, beam #1 covers points on the circle corresponding to the positive x direction (DOWN-RIGHT) (not shown), beam #2 covers points on the circle corresponding to the positive y direction (UP-RIGHT), beam #3 covers points on the circle corresponding to the negative x direction (UP-LEFT), and beam #4 covers points on the circle corresponding to the negative y direction (DOWN-LEFT). As discussed above, the directions of the beam #n in the default codebook $CB^C$ may be represented by the direction set $S_n^{\mathrm{D}}$.

Fig. 6(b) shows UE rotations at different time instances. When the UE 110 rotates from the UE orientation $O^{(1)}$ to the UE orientation $O^{(2)}$, at least a portion of the directions $\psi_q$ in the direction set $S_n^{\mathrm{D}}$ (n=2) intended to be sensed by the beam #2 is not covered by the beam #2 anymore. In this case, the UE 110 may select a beam from the oversampled codebook $CB^F$ to sense the directions $S_n^{\mathrm{D}}$ (n=2). In an example embodiment, the UE 110 may transform the directions $\psi_q \in S_n^{\mathcal{D}}$ (n=2) in the GCS to the directions in the LCS and then select a beam from the oversampled codebook $CB^F$ based on the transformed directions in the LCS. 3D rotation angles ($\alpha^{(n)}$, $\beta^{(n)}$, $\gamma^{(n)}$) may be obtained to represent the UE rotation from the orientation $O^{(1)}$ to the orientation $O^{(n)}$ as:

$$R(\alpha,\beta,\gamma) = R_Z(\alpha)R_Y(\beta)R_X(\gamma) =$$

$$\begin{pmatrix} +\cos\alpha & -\sin\alpha & 0 \\ +\sin\alpha & +\cos\alpha & 0 \\ 0 & 0 & 1 \end{pmatrix} \begin{pmatrix} +\cos\beta & 0 & +\sin\beta \\ 0 & 1 & 0 \\ -\sin\beta & 0 & +\cos\beta \end{pmatrix} \begin{pmatrix} 1 & 0 & 0 \\ 0 & +\cos\gamma & -\sin\gamma \\ 0 & +\sin\gamma & +\cos\gamma \end{pmatrix} \text{ (equation 6)}$$

Then the directions $\psi_q \in S_n^{\mathcal{D}}$ in the GCS may be transformed to the directions $\omega_q$ in the LCS as below:

$$\omega_q^{(n)} = R(\alpha^{(n)},\beta^{(n)},\gamma^{(n)})^{-1}\psi_q \quad \forall q \in S_n^{\mathcal{D}} \qquad \text{(equation 7)}$$

Thus, after the rotation procedure, the desired directions ($\psi_q \in S_n^{\mathcal{D}}$) in the GCS are transformed to directions ($\omega_q^{(n)} \in S_n^{Z^{(n)}}$) in the LCS. Then, the UE 110 may select one or multiple beams (e.g. beam #t) from the oversampled codebook $CB^F$ that covers the same or similar directions/areas. In other words, for each direction $\omega_q^{(n)}$ in the transformed desired direction set $S_n^{Z^{(n)}}$, there is a close direction $\zeta_k$ in the direction set of the selected oversampled beam. In an example embodiment, cosine distance can be used as a metric to compare two directions $\omega_q^{(n)}$ and $\zeta_k$.

Fig. 6(c) shows the beam selection from the oversampled codebook $CB^F$ based on the UE rotation and the desired directions for sensing. When the UE 110 is in the orientation $O^{(2)}$, the beam #4 in the oversampled codebook $CB^F$ is selected to sense the UP-RIGHT direction which is intended to be sensed by the beam #2 in the default codebook $CB^C$ when the UE 110 is in the orientation $O^{(1)}$. Similarly, when the UE 110 rotates to the orientation $0(3)$ at a next time instance, the beam #6 in the oversampled codebook $CB^F$ is selected to sense the UP-LEFT direction which is intended to be sensed by the beam #3 in the default codebook $CB^C$ when the UE 110 is in the orientation $O^{(1)}$. When the UE 110 rotates to the orientation $O^{(4)}$, the beam #9 in the oversampled codebook $CB^F$ is selected to sense the DOWN-LEFT direction which is intended to be sensed by the beam #4 in the default codebook $CB^C$ when the UE 110 is in the orientation $O^{(1)}$. As mentioned above, the measured RSRPs for the n-th beam in the beam sweeping sequence may be stored in $R_{sn,m}$ ($m = 1, 2, ..., M$).

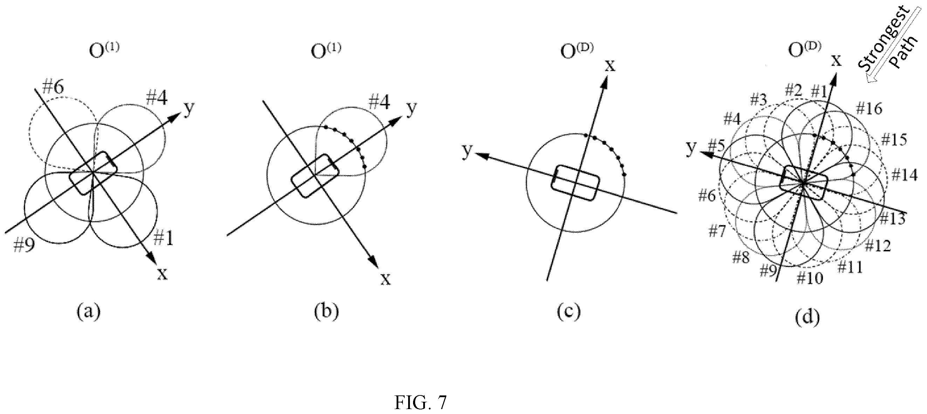

After measuring the RSRPs with all the beams in the beam sweeping sequence s, the UE 110 may aggregate the beam measurements stored in the matrix $R \in \mathbb{R}^{N^C \times M}$ and select the optimal beam pair(s) or at least the optimal Rx beam for communication with the base station 120. Fig. 7 illustrates an example of the beam measurements aggregation. In the example, beam measurements associated with the beam #1 of the default codebook $CB^C$ and the beams #4, #6, #9 of the oversampled codebook $CB^F$ are aggregated, as shown in Fig. 7(a). It is worth noting that the beam #4 of the oversampled codebook $CB^F$ in the UE orientation $O^{(2)}$ corresponds to the beam #2 of the default codebook $CB^C$ in the UE orientation $O^{(1)}$, the beam #6 of the oversampled codebook $CB^F$ in the UE orientation $0(3)$ corresponds to the beam #3 of the default codebook $CB^C$ in the UE orientation $O^{(1)}$, and the beam #9 of the oversampled codebook $CB^F$ in the UE orientation $0(4)$ corresponds to the beam #4 of the default codebook $CB^C$ in the UE orientation $O^{(1)}$. In other words, the beam measurements may be aggregated in a space referenced by the UE orientation $O^{(1)}$.

Based on the beam measurements aggregation, the UE 110 may select the best/optimal UE Rx beam #n* from the beam sweeping sequence (i.e., the default codebook $CB^C$) and the best/optimal network Tx beam #m* that have the highest RSRP, i.e.,

$$n^*, m^* = \underset{n,m}{\operatorname{argmax}} R_{s_{n,m}} \qquad \text{(equation 8)}$$

In the example shown in Fig. 7(b), the beam #2 of the default codebook $CB^C$ corresponding to the beam #4 of the oversampled codebook $CB^F$ is selected as the best UE beam. However, the selected UE beam #n* is for the UE 110 in the orientation $O^{(1)}$. When the UE 110 decides the best beam pair(s) and reports the best Tx beam(s) to the network, the UE 110 may have rotated to an orientation $O^{(D)}$ where the selected UE beam #n* is not aligned to the network Tx beam #m* anymore. So, similar rotation processing needs to be done to the selected UE beam #n* according to the equations 6-7, in order to determine the best UE beam for the UE 110 at the orientation $O^{(D)}$. In the example shown in Fig. 7(d), it is determined that, when the UE 110 is in the orientation $O^{(D)}$, the beam #16 of the oversampled codebook $CB^F$ is oriented to cover the same or similar directions of the beam #2 of the default codebook $CB^C$ in the UE orientation $O^{(1)}$. Therefore, the UE 110 determines the beam #16 of the oversampled codebook $CB^F$ as the best Rx beam corresponding to the UE orientation $O^{(D)}$ at the decisioning time.

In another example embodiment, the UE 110 may represent the beam measurements in the direction space. For each NW beam #m, the UE 110 may aggregate all the measurement representations from different UE beams with the same NW beam. Then the UE 110 may select the best beam pair or at least the best Rx beam with the highest RSRP. Also, the selected best Rx beam corresponds to a certain UE orientation that may have been outdated due to continuous UE rotation. Similar rotation processing based on equations 6-7 may be done to obtain the optimal UE Rx beam for the latest UE orientation $O^{(D)}$. In other words, beam selection based on the values of the matrix R gives the optimal Rx beam at a certain orientation. So, after the beam selection using the Matrix R, the corresponding direction/area at the certain UE orientation is transformed to directions and consequently to an Rx beam(s) at the UE orientation $O^{(D)}$.

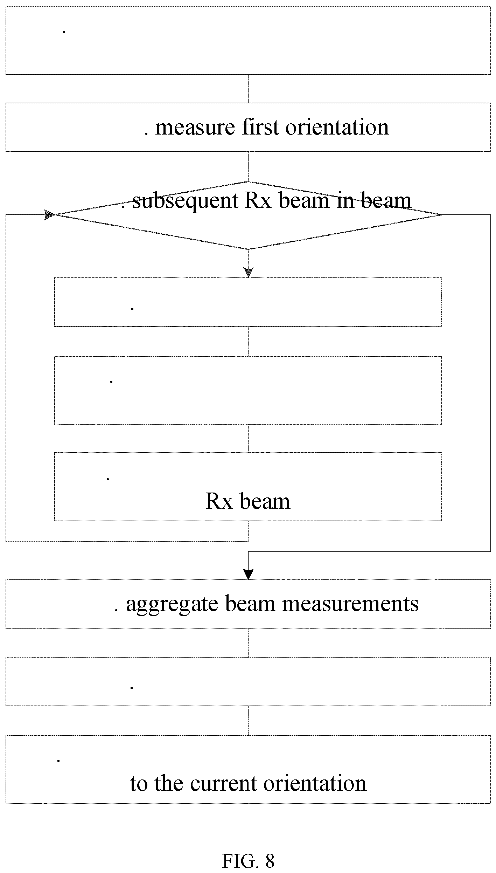

Fig. 8 illustrates a method 200 for beam sweeping according to an example embodiment of the present disclosure. The method 200 may be implemented at the UE 110. Since details of the beam sweeping procedure have been described above with reference to Figs. 1-7, the method 200 will be described briefly here.

Referring to Fig. 8, the UE 110 may measure network Tx beams using a first Rx beam in a beam sweeping sequence at 210. As discussed above, the beam sweeping sequence may include a first set of Rx beams (i.e. beams of a default beam codebook) that are used for beam sweeping when the UE 110 is in the stationary condition. Before the step 210, the UE 110 may have acquired synchronization with the network and obtained basic cell information using SSBs received from the network.

At 212, the UE 110 may measure a first UE orientation corresponding to the beam measurement performed using the first Rx beam. It would be appreciated that the UE 110 may measure the first UE orientation before, during or after it measures the Tx beams using the first Rx beam in the beam sweeping sequence at the step 210.

With the steps 210, 212, the UE 110 has measured the network Tx beams using the first Rx beam in the beam sweeping sequence and determined UE orientation corresponding to the first beam measurement. Then the UE 110 may proceed to perform beam measurements using subsequent beams in the beam sweeping sequence. The UE 110 may determine whether there is a subsequent beam in the beam sweeping sequence at 214. If it is determined that there is a subsequent beam in the beam sweeping sequence, the UE 110 may measure a second UE orientation at 216. Here it is assumed that the UE 110 is rotating during the beam sweeping procedure and the second UE orientation is different from the first UE orientation measured at 212. Then the UE 110 may select at 218 a Rx beam from a second set of Rx beams (i.e. an oversampled beam codebook) that corresponds to the subsequent Rx beam in the beam sweeping sequence. As discussed above, the second set of Rx beams is used to compensate for the UE rotation, and it may include more beams with higher spatial resolution than the first set of Rx beams. In an example, the first set of Rx beams may be a subset of the second set of Rx beams. In another example, the first set of Rx beams may be at least partially different from the second set of beams. For instance, at least one of the first set of Rx beams may not be included in the second set of Rx beams. The UE 110 may determine the first set of Rx beams and the second set of Rx beams in consideration of hardware imperfections/limitations at the UE 110.

The UE 110 may select the Rx beam from the second set of Rx beams that corresponds to the subsequent Rx beam in the beam sweeping sequence based on the first UE orientation and the second UE orientation. For instance, when the UE 110 is in the second orientation, the selected Rx beam in the second set of Rx beams is oriented to correspond to directions covered by the subsequent Rx beam in the beam sweeping sequence when the UE 110 is in the first orientation. In an example embodiment, the UE 110 may determine directions covered by the subsequent Rx beam in the beam sweeping sequence when the UE 110 is in the first orientation, and then select the Rx beam in the second set of Rx beams that is closest to the determined directions when the UE 110 is in the second orientation. In an example embodiment, the UE 110 may select more than one Rx beam in the second set of Rx beams that is closest to the determined directions.

Then at 220, the UE 110 may measure the network Tx beams using the Rx beam selected from the second set of Rx beams.

The UE 110 may repeatedly perform the steps 216, 218, 220 for each subsequent Rx beams in the beam sweeping sequence. It is noted again that beams in the second set of Rx beams (i.e., the oversampled beam codebook) are selected for the beam sweeping when the UE 110 rotates during the beam sweeping procedure and the second UE orientation measured at 216 is different from the first UE orientation measured at 214. If the UE 110 is in the stationary condition and the second UE orientation is identical to the first UE orientation, the UE 110 may use the subsequent beam in the beam sweeping sequence to measure the network Tx beams, and the second set of Rx beams may not be used.

When the UE 110 goes through all subsequent beams in the beam sweeping sequence at 214, the UE 110 may aggregate the beam measurements to select an optimal beam pair, i.e., an optimal Tx beam and an optimal Rx beam, or at least the optimal Rx beam, at 222. The optimal Rx beam may be selected from the beam sweeping sequence. For instance, if a beam selected from the second set of beams has the highest RSRP, the subsequent beam in the beam sweeping sequence corresponding to the beam selected from the second set of beams may be selected as the optimal Rx beam. In other words, the selected optimal Rx beam may correspond to the first/initial UE orientation.

The UE 110 may measure a current/latest UE orientation at 224, and determine an optimal Rx beam in the second set of Rx beams corresponding to the current UE orientation at 226. When the UE 110 is in the current UE orientation, the determined optimal Rx beam is oriented to correspond to directions covered by the optimal Rx beam in the beam sweeping sequence when the UE 110 is in the first orientation. Thus, the UE rotation is compensated for, and the optimal Rx beam determined at the UE 110 is not outdated at the time when the UE 110 eventually determines the optimal Rx beam from the beam sweeping procedure.

In an example embodiment, to determine the optimal Rx beam corresponding to the current UE orientation, the UE 110 may determine directions covered by the optimal Rx beam selected from the beam sweeping sequence at 222 when the UE 110 is in the first orientation, and then select an Rx beam in the second set of Rx beams that is closest to the determined directions when the UE 110 is in the current orientation. In an example embodiment, the UE 110 may select more than one Rx beam in the second set of Rx beams that is closest to the determined directions as the optimal Rx beam(s) corresponding to the current UE orientation.

It would be appreciated that the determined optimal Rx beam corresponds to the current/latest UE orientation, and it may also become outdated if the UE 110 continue to rotate to a new orientation. If the UE 110 rotates but it does not move to a new location, the steps 224-226 may be repeatedly performed to determine the optimal Rx beam for the new/latest UE orientation. If the UE 110 rotates and moves, the method 200 may be periodically performed to determine the optimal beam pair for communication between the UE 110 and the base station 120 (or another base station). The method 200 may be performed in the P-1, P-2 or P-3 procedure defined in 3GPP TR 38.802.

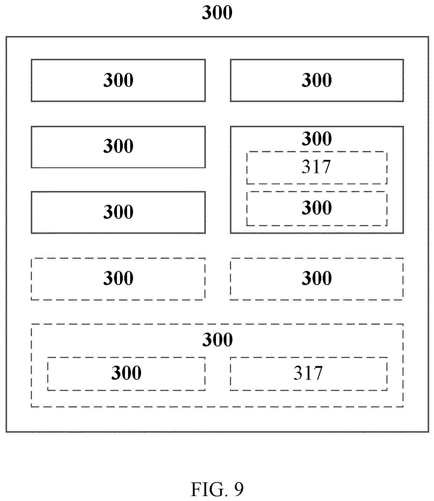

Fig. 9 is a block diagram illustrating an apparatus 300 according to an example embodiment of the present disclosure. The apparatus 300 may be implemented to comprise or to form at least a part of the UE 110 discussed above to perform at least a part of operations related to the UE 110. Since the operations related to the UE 110 have been discussed above with reference to Figs. 1-8, the blocks of the apparatus 300 will be described briefly here and details thereof may refer to the above description.

As shown in Fig. 9, the apparatus 300 may include a first means 310 for measuring a plurality of network Tx beams using a first Rx beam in a beam sweeping sequence, and a second means 312 for measuring a first orientation of the UE 110 corresponding to the beam measurement performed using the first Rx beam. The beam sweeping sequence may comprise a first set of Rx beams.

The apparatus 300 may further include a third means 314 for measuring a second orientation of the UE 110, a fourth means 316 for selecting an Rx beam from a second set of Rx beams for a second beam measurement corresponding to the second orientation, and a fifth means 318 for measuring the plurality of Tx beams using the Rx beam selected from the second set of Rx beams. The second orientation is different from the first orientation. When the UE 110 is in the second orientation, the Rx beam selected from the second set of Rx beams is oriented to correspond to directions covered by a subsequent Rx beam in the beam sweeping sequence when the UE 110 is in the first orientation.

In an example embodiment, the fourth means 316 may include a first sub-means 317 for determining directions covered by the subsequent Rx beam in the beam sweeping sequence when the UE 110 is in the first orientation, and a second sub-means for determining at least one Rx beam in the second set of Rx beams that is closest to the determined directions when the UE 110 is in the second orientation.

With continuous reference to Fig. 9, the apparatus 300 may optionally include a sixth means 320 for aggregating the beam measurements to select at least an optimal Rx beam from the beam sweeping sequence, a seventh means 322 for measuring a current orientation of the UE 110, and an eighth means 324 for determining an optimal Rx beam in the second set of Rx beams corresponding to the current orientation of the UE 110. When the UE 110 is in the current orientation, the determined optimal Rx beam is oriented to correspond to directions covered by the optimal Rx beam in the beam sweeping sequence when the UE 110 is in the first orientation.

In an example embodiment, the eighth means 324 may include a third sub-means 325 for determining directions covered by the optimal Rx beam selected from the beam sweeping sequence when the UE 110 is in the first orientation, and a fourth sub-means 327 for determining at least one optimal Rx beam in the second set of Rx beams that is closest to the determined directions when the UE 110 is in the current orientation.

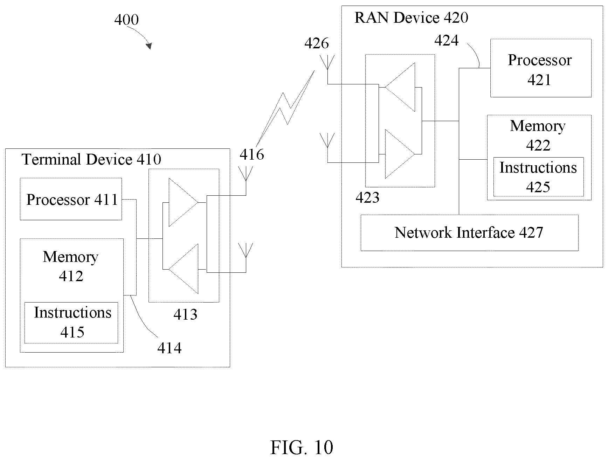

Fig. 10 is a block diagram illustrating devices in a communication system 400 in accordance with an example embodiment of the present disclosure. As shown in Fig. 10, the communication system 400 may include a terminal device 410 and a radio access network (RAN) device 420. It would be appreciated that the communication system 400 may include a plurality of RAN devices 420, and each RAN device 420 may serve a plurality of terminal devices 410. The terminal device 410 may be implemented as the UE 110 discussed above, and the RAN device 420 may be implemented as the base station 120 discussed above.

Referring to Fig. 10, the terminal device 410 may comprise one or more processors 411, one or more memories 412 and one or more transceivers 413 interconnected through one or more buses 414. The one or more buses 414 may be address, data, or control buses, and may include any interconnection mechanism such as series of lines on a motherboard or integrated circuit, fiber, optics or other optical communication equipment, and the like. Each of the one or more transceivers 413 may comprise a receiver and a transmitter, which are connected to one or more antennas 416. The terminal device 410 may wirelessly communicate with the RAN device 420 through the one or more antennas 416. The one or more memories 412 may include instructions 415 which, when executed by the one or more processors 411, may cause the terminal device 410 to perform operations and procedures relating to the UE 110 as described above.

The RAN device 420 may comprise one or more processors 421, one or more memories 422, one or more transceivers 423 and one or more network interfaces 427 interconnected through one or more buses 424. The one or more buses 424 may be address, data, or control buses, and may include any interconnection mechanism such as a series of lines on a motherboard or integrated circuit, fiber, optics or other optical communication equipment, and the like. Each of the one or more transceivers 423 may comprise a receiver and a transmitter, which are connected to one or more antennas 426. The RAN device 420 may operate as a base station for the terminal device 410 and wirelessly communicate with terminal device 410 through the one or more antennas 426. The one or more network interfaces 427 may provide wired or wireless communication links through which the RAN device 420 may communicate with other network devices, entities, elements or functions. For example, the RAN device 420 may communicate with a core network device (not shown) via backhaul connections. The one or more memories 422 may include instructions 425 which, when executed by the one or more processors 421, may cause the RAN device 420 to perform operations and procedures relating to the base station 120 as described above.

The one or more processors 411, 421 discussed above may be of any appropriate type that is suitable for the local technical network, and may include one or more of general purpose processors, special purpose processor, microprocessors, a digital signal processor (DSP), one or more processors in a processor based multi-core processor architecture, as well as dedicated processors such as those developed based on Field Programmable Gate Array (FPGA) and Application Specific Integrated Circuit (ASIC). The one or more processors 411, 421 may be configured to control other elements of the terminal/RAN devices and operate in cooperation with them to implement the procedures discussed above.

The one or more memories 412, 422 may include at least one storage medium in various forms, such as a transitory memory and/or a non-transitory memory. The transitory memory may include, but not limited to, for example, a random access memory (RAM) or a cache. The non-transitory memory may include, but not limited to, for example, a read only memory (ROM), a hard disk, a flash memory, and the like. The term "non-transitory," as used herein, is a limitation of the medium itself (i.e., tangible, not a signal) as opposed to a limitation on data storage persistency (e.g., RAM vs. ROM). Further, the one or more memories 412, 422 may include but not limited to an electric, a magnetic, an optical, an electromagnetic, an infrared, or a semiconductor system, apparatus, or device or any combination of the above.

It would be understood that blocks in the drawings may be implemented in various manners, including software, hardware, firmware, or any combination thereof. In some embodiments, one or more blocks may be implemented using software and/or firmware, for example, machine-executable instructions stored in the storage medium. In addition to or instead of machine-executable instructions, parts or all of the blocks in the drawings may be implemented, at least in part, by one or more hardware logic components. For example, and without limitation, illustrative types of hardware logic components that can be used include Field-Programmable Gate Arrays (FPGAs), Application-Specific Integrated Circuits (ASICs), Application-Specific Standard Products (ASSPs), System-on-Chip systems (SOCs), Complex Programmable Logic Devices (CPLDs), etc.

Some exemplary embodiments further provide program instruction or instructions which, when executed by one or more processors, may cause a device or apparatus to perform the procedures described above. The program instruction for carrying out procedures of the exemplary embodiments may be written in any combination of one or more programming languages. The program instruction may be provided to one or more processors or controllers of a general purpose computer, special purpose computer, or other programmable data processing apparatus, such that the program instruction, when executed by the processor or controller, cause the functions/operations specified in the flowcharts and/or block diagrams to be implemented. The program instruction may execute entirely on a machine, partly on the machine, as a stand-alone software package, partly on the machine and partly on a remote machine or entirely on the remote machine or server.

Some exemplary embodiments further provide a computer program product or a computer readable medium having the program instruction or instructions stored therein. The computer readable medium may be any tangible medium that may contain, or store a program for use by or in connection with an instruction execution system, apparatus, or device. The machine readable medium may be a machine readable signal medium or a machine readable storage medium. A machine readable medium may include but is not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in a language that is specific to structural features and/or method actions, it is to be understood the subject matter defined in the appended claims is not limited to the specific features or actions described above. On the contrary, the above-described specific features and actions are disclosed as an example of implementing the claims.

**Claims**

1. An apparatus, comprising:

   means for measuring a plurality of transmitting beams using a first receiving beam in a beam sweeping sequence comprising a first set of receiving beams;
   means for measuring a first orientation of a terminal device corresponding to the beam measurement performed using the first receiving beam;
   means for, for a subsequent receiving beam in the beam sweeping sequence, measuring a second orientation of the terminal device;
   means for selecting a receiving beam from a second set of receiving beams for a second beam measurement corresponding to the second orientation, the selected receiving beam being oriented, when the terminal device is in the second orientation, to correspond to directions covered by the subsequent receiving beam in the beam sweeping sequence when the terminal device is in the first orientation; and
   means for measuring the plurality of transmitting beams using the selected receiving beam.

2. The apparatus of claim 1, further comprising:

   means for aggregating the beam measurements to select at least an optimal receiving beam from the beam sweeping sequence;
   means for measuring a current orientation of the terminal device; and
   means for determining an optimal receiving beam in the second set of receiving beams corresponding to the current orientation of the terminal device, the determined optimal receiving beam being oriented, when the terminal device is in the current orientation, to correspond to directions covered by the optimal receiving beam in the beam sweeping sequence when the terminal device is in the first orientation.

3. The apparatus of claim 1 or 2, wherein the means for selecting the receiving beam from the second set of receiving beams comprises:

   a first sub-means for determining directions covered by the subsequent receiving beam in the beam sweeping sequence when the terminal device is in the first orientation; and
   a second sub-means for determining at least one receiving beam in the second set of receiving beams that is closest to the determined directions when the terminal device is in the second orientation.

4. The apparatus of claim 2 or 3, wherein the means for determining the optimal receiving beam in the second set of receiving beams comprises:

   a third sub-means for determining directions covered by the optimal receiving beam selected from the beam sweeping sequence when the terminal device is in the first orientation; and
   a fourth sub-means for determining at least one optimal receiving beam in the second set of receiving beams that is closest to the determined directions when the terminal device is in the current orientation.

5. The apparatus of any preceding claim, wherein the first set of receiving beams is a subset of the second set of receiving beams, or at least one of the first set of receiving beams is different from the second set of receiving beams.

6. The apparatus of any preceding claim, wherein the second set of receiving beams have higher spatial resolution than the first set of receiving beams.

7. The apparatus of any preceding claim, wherein the first set of receiving beams and the second set of receiving beams are designed in consideration of hardware limitations of the terminal device.

8. A method, comprising:

   measuring a plurality of transmitting beams using a first receiving beam in a beam sweeping sequence comprising a first set of receiving beams;
   measuring a first orientation of a terminal device corresponding to the beam measurement performed using the first receiving beam; and
   for a subsequent receiving beam in the beam sweeping sequence,

measuring a second orientation of the terminal device;

selecting a receiving beam from a second set of receiving beams for a second beam measurement corresponding to the second orientation, the selected receiving beam being oriented, when the terminal device is in the second orientation, to correspond to directions covered by the subsequent receiving beam in the beam sweeping sequence when the terminal device is in the first orientation; and

measuring the plurality of transmitting beams using the selected receiving beam.

9. The method of claim 8, further comprising:

aggregating the beam measurements to select at least an optimal receiving beam from the beam sweeping sequence;

measuring a current orientation of the terminal device; and

determining an optimal receiving beam in the second set of receiving beams corresponding to the current orientation of the terminal device, the determined optimal receiving beam being oriented, when the terminal device is in the current orientation, to correspond to directions covered by the optimal receiving beam in the beam sweeping sequence when the terminal device is in the first orientation.

10. The method of claim 8 or 9, wherein selecting the receiving beam from the second set of receiving beams comprises:

determining directions covered by the subsequent receiving beam in the beam sweeping sequence when the terminal device is in the first orientation; and

determining at least one receiving beam in the second set of receiving beams that is closest to the determined directions when the terminal device is in the second orientation.

11. The method of claim 9 or 10, wherein determining the optimal receiving beam in the second set of receiving beams comprises:

determining directions covered by the optimal receiving beam selected from the beam sweeping sequence when the terminal device is in the first orientation; and

determining at least one optimal receiving beam in the second set of receiving beams that is closest to the determined directions when the terminal device is in the current orientation.

12. The method of any of claims 8 to 11, wherein the first set of receiving beams is a subset of the second set of receiving beams, or at least one of the first set of receiving beams is different from the second set of receiving beams.

13. The method of any of claims 8 to 12, wherein the second set of receiving beams have higher spatial resolution than the first set of receiving beams.

14. The method of any of claims 8 to 13, wherein the first set of receiving beams and the second set of receiving beams are designed in consideration of hardware limitations of the terminal device.

15. A computer readable medium comprising instructions stored thereon for performing at least the following:

measuring a plurality of transmitting beams using a first receiving beam in a beam sweeping sequence comprising a first set of receiving beams;

measuring a first orientation of a terminal device corresponding to the beam measurement performed using the first receiving beam; and

for a subsequent receiving beam in the beam sweeping sequence,

measuring a second orientation of the terminal device;

selecting a receiving beam from a second set of receiving beams for a second beam measurement corresponding to the second orientation, the selected receiving beam being oriented, when the terminal device is in the second orientation, to correspond to directions covered by the subsequent receiving beam in the beam sweeping sequence when the terminal device is in the first orientation; and

measuring the plurality of transmitting beams using the selected receiving beam.

122

122b

122a

122b

122a

122b

122a

FIG. 1

FIG. 2

FIG. 3

FIG. 4

FIG. 5

FIG. 6

FIG. 7

EP 4 568 134 A1

. measure first orientation

. subsequent Rx beam in beam

.

.

. Rx beam

. aggregate beam measurements

.

. to the current orientation

FIG. 8

19

300

```
┌─────────────────────────────────────────────────┐
│                                                   │
│  ┌──────────────────┐   ┌──────────────────┐     │
│  │       300        │   │       300        │     │
│  └──────────────────┘   └──────────────────┘     │
│                                                   │
│  ┌──────────────────┐   ┌──────────────────┐     │
│  │       300        │   │       300        │     │
│  └──────────────────┘   │ ┌ ─ ─ ─ ─ ─ ─ ┐  │     │
│                         │ │     317     │  │     │
│  ┌──────────────────┐   │ └ ─ ─ ─ ─ ─ ─ ┘  │     │
│  │       300        │   │ ┌ ─ ─ ─ ─ ─ ─ ┐  │     │
│  └──────────────────┘   │ │     300     │  │     │
│                         │ └ ─ ─ ─ ─ ─ ─ ┘  │     │
│  ┌ ─ ─ ─ ─ ─ ─ ─ ─ ┐   ┌ ─ ─ ─ ─ ─ ─ ─ ┐  │     │
│  │       300        │   │       300       │        │
│  └ ─ ─ ─ ─ ─ ─ ─ ─ ┘   └ ─ ─ ─ ─ ─ ─ ─ ┘        │
│  ┌ ─ ─ ─ ─ ─ ─ ─ ─ ─ ─ ─ ─ ─ ─ ─ ─ ─ ─ ┐       │
│  │               300                      │        │
│  │ ┌ ─ ─ ─ ─ ─ ┐  ┌ ─ ─ ─ ─ ─ ┐          │        │
│  │ │    300    │  │    317    │          │        │
│  │ └ ─ ─ ─ ─ ─ ┘  └ ─ ─ ─ ─ ─ ┘          │        │
│  └ ─ ─ ─ ─ ─ ─ ─ ─ ─ ─ ─ ─ ─ ─ ─ ─ ─ ─ ┘       │
└─────────────────────────────────────────────────┘
```

FIG. 9

400

RAN Device 420

426

424

Processor
421

416

Memory
422

Instructions
425

Terminal Device 410

Processor 411

Memory
412

Instructions
415

413

414

423

Network Interface 427

FIG. 10

Europäisches Patentamt

European Patent Office

Office européen des brevets

## EUROPEAN SEARCH REPORT

**Application Number**

EP 24 21 5070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/118716 A1 (STEPHENNE ALEX [CA] ET AL) 28 April 2016 (2016-04-28) | 1-5, 7-12,14, 15 | INV.<br>H04B7/06<br>H04B7/08 |
| A | * paragraph [0038] - paragraph [0075] * | 6,13 | |
| | ----- | | |
| X | US 2020/045621 A1 (SELÉN YNGVE [SE] ET AL) 6 February 2020 (2020-02-06) | 1-5, 7-12,14, 15 | |
| A | * paragraph [0050] - paragraph [0088] * | 6,13 | |
| | ----- | | |

**TECHNICAL FIELDS SEARCHED (IPC)**

H04B

The present search report has been drawn up for all claims

| Place of search | Date of completion of the search | Examiner |
|---|---|---|
| Munich | 9 April 2025 | Neeb, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 5070

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | | Publication date |
|---|---|---|---|---|
| US 2016118716 A1 | 28-04-2016 | US | 2016118716 A1 | 28-04-2016 |
| | | WO | 2016062190 A1 | 28-04-2016 |
| US 2020045621 A1 | 06-02-2020 | AU | 2015394495 A1 | 23-11-2017 |
| | | BR | 112017024153 A2 | 17-07-2018 |
| | | CN | 107580757 A | 12-01-2018 |
| | | CN | 112202482 A | 08-01-2021 |
| | | DK | 3295582 T3 | 25-11-2019 |
| | | EP | 3295582 A1 | 21-03-2018 |
| | | EP | 3703275 A1 | 02-09-2020 |
| | | ES | 2755366 T3 | 22-04-2020 |
| | | JP | 6644812 B2 | 12-02-2020 |
| | | JP | 2018524844 A | 30-08-2018 |
| | | KR | 20180008585 A | 24-01-2018 |
| | | MA | 41401 A1 | 29-06-2018 |
| | | MX | 367990 B | 13-09-2019 |
| | | MY | 181852 A | 11-01-2021 |
| | | RU | 2669191 C1 | 09-10-2018 |
| | | US | 2017111852 A1 | 20-04-2017 |
| | | US | 2020045621 A1 | 06-02-2020 |
| | | US | 2021352576 A1 | 11-11-2021 |
| | | US | 2024049120 A1 | 08-02-2024 |
| | | WO | 2016180497 A1 | 17-11-2016 |
| | | ZA | 201707785 B | 29-01-2020 |

EPO FORM P0459

For more details about this annex : see Official Journal of the European Patent Office, No. 12/82